Europäisches Patentamt
European Patent Office
Office européen des brevets

(19) (11) Publication number: 0 138 703 B1

(12) # EUROPEAN PATENT SPECIFICATION

(45) Date of publication of patent specification: 26.07.89

(51) Int. Cl.$^4$: C 08 B 3/22

(21) Application number: 84402020.6

(22) Date of filing: 09.10.84

(54) **Carboxylated cellulose ester.**

(30) Priority: 14.10.83 US 542233
17.02.84 US 581014

(43) Date of publication of application:
24.04.85 Bulletin 85/17

(45) Publication of the grant of the patent:
26.07.89 Bulletin 89/30

(84) Designated Contracting States:
BE DE FR GB IT NL SE

(56) References cited:
CHEMICAL ABSTRACTS, vol. 60, no. 8, 1964, column 9467e; G.O.RADCHENKO et al.: "Cellulose acetate peroxides"
ABSTRACT BULLETIN OF THE INSTITUTE FOR PATER CHEMISTRY, vol. 34, no. 7, March 1964, J.ALFÖLDI et al.: "Ozonization of cellulose acetates of varying degrees of acetylation", pp. 961-962, no. 4403

The file contains technical information submitted after the application was filed and not included in this specification

(73) Proprietor: EASTMAN KODAK COMPANY (a New Jersey corporation)
343 State Street
Rochester New York 14650 (US)

(72) Inventor: Bogan, Richard Thomas
700 Thornwood Place
Kingsport Tennessee 37660 (US)
Inventor: Kuo, Chung-Ming
2625 Brighton Court
Kingsport Tennessee 37660 (US)

(74) Representative: Parent, Yves et al
Kodak-Pathé Département Brevets et Licences
Centre de Recherches et de Technologie Zone Industrielle
F-71102 Chalon-sur-Saône Cédex (FR)

(56) References cited:
RESEARCH DISCLOSURE, no. 239, March 1984, pp. 90-91, no. 23917, Havant, Hampshire (GB): "Cellulose ester derivatives and uses thereof"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 138 703 B1

## Description

This invention pertains to a new product referred to herein as "carboxylated cellulose ester." The present invention also pertains to a process especially suited for the manufacture of carboxylated cellulose esters and to uses of carboxylated cellulose esters in pigment dispersions, metal coating systems, ink compositions, and wood finishes.

The oxidative treatment of cellulosic materials has been studied for many years. It is known, for example, that cellulosic materials, including cellulose (in the form of pulp, lint, etc.), cellulose esters, or cellulose ethers, can be bleached by treatment with oxygen or ozone. However, it is widely recognized that such a bleaching treatment occurs extremely rapidly and does not involve any significant reaction with the cellulosic substrate, as evidenced by absence of by-products, little, if any, reduction in molecular weight, etc.

It is further known that cellulose derivatives, such as cellulose esters and cellulose ethers, can be degraded oxidatively by treatment with air or oxygen at elevated temperatures. See, for example, *Proceedings of the Academy Of Sciences of the U.S.S.R.,* Vol. 114, p. 569—571 (1957). It is disclosed therein that oxidative degradation of such cellulose derivatives is accompanied by a reduction in the degree of polymerization and the appearance of by-products, such as acids and aldehydes, caused by cleavage of ether and ester groups. There is no indication that any further chemical processes, such as carboxylation of the cellulosic residue, occurs during the oxidative degradation of cellulose esters.

Chemical modifications of cellulose ethers is further described in a number of publications, such as "Mechanism of Ozone Attack on α-Methyl Glucoside and Cellulosic Materials", *Journal of Polymer Science: Part A—1,* Vol. 4, pages 2683—2703 (1966), by A. A. Katai and Conrad Schuerch; U.S. Patent Nos. 4,226,849; 4,316,982; and 4,357,469. None of these references relates to cellulose esters or processes for the chemical modification thereof.

U.S. Patent No. 4,143,666 discloses a smoking material which is provided by the treatment of a film-forming carbohydrate material with ozone. The carbohydrate materials employed in the Examples of the patent include lemon albedo, carboxymethylcellulose, amylose, and amylopectin. The manufacture of carboxylated cellulose esters is not disclosed by this reference.

U.S. Patent No. 3,138,564 discloses the oxidation of naturally occurring polysaccharides, such as casein, starch, gelatine, pectin, carboxymethylcelluose (a cellulose ether), alginates, and cellulose. The oxidized polymer can then be employed in the preparation of a graft copolymer. The patent neither discloses nor suggests the use of cellulose esters in the disclosed process. In fact, because cellulose esters are not "naturally occurring polysaccharides," this class of cellulose derivatives is specifically excluded from the teachings of the patent reference.

It is further known in the art that ordinary cellulose esters (i.e., cellulose esters *per se* which have not been subjected to chemical modification) can be employed as film-forming solids in various applications. See, for example, U.S. Patent No. 3,639,147. However, these prior art compositions which employ ordinary cellulose esters frequently exhibit relatively low solids contents. That is, the compositions require excessive amounts of solvents which present difficulties with regard to drying time, solvent evaporation and other environmental concerns, etc. In addition, ordinary cellulose esters exhibit limited compatibility with some classes of polymeric materials. Chemical Abstracts, Vol. 60, No. 8, 1964, 9467e refers to an ozone treatment of cellulose acetate leading to an oxidative degradation product containing carboxylate groups and characterised by a significantly lower viscosity than the cellulose acetate precursor.

In contrast to the prior art, this invention provides a new product which overcomes the above-described disadvantages. The new product is referred to herein as "carboxylated cellulose ester." The carboxylated cellulose ester of the present invention has an acid number of at least 5 and an inherent viscosity of 0.01 to 1.00. The present invention further provides a process which is suited for the preparation of carboxylated cellulose esters. The process comprises the steps of providing a cellulose ester to a reaction zone; intimately contacting the cellulose ester in the reaction zone with a gaseous stream comprising ozone; and reacting the cellulose ester with the ozone at a temperature of 25 to 80°C for a period of time sufficient to yield a carboxylated cellulose ester product having an acid number of at least 5. The present invention also incorporates within its scope the use of a carboxylated cellulose ester in pigment dispersions, in metal coating systems, in ink compositions, and in wood finishes.

### Carboxylated Cellulose Ester Product

The carboxylated cellulose ester product is characterized principally on the basis of acid number as determined by potentiometric titration. More specifically, the acid number for the carboxylated cellulose ester can be determined by automatic instrumental potentiometric titration using any standard commercial instrument. The automatic titrimeter will commonly employ a typical combination electrode of the silver/silver chloride type which responds to changes in hydrogen ion concentration. To determine the acid number of a carboxylated cellulose ester product, a sample of the product (typically, 0.7 to 1 g) is dissolved in a solvent comprising 90:10 (by volume) methylene chloride:methanol. This solution is then titrated with a known concentration (usually 0.05 to 0.2N; typically, 0.1N) of tetramethyleneguanidine in 2-propanol. From the number of equivalents of base required to accomplish the titration is calculated the acid number

(i.e., the number of milligrams of potassium hydroxide which would have been consumed in the neutralization of 1 g of the product sample).

The carboxylated cellulose ester product typically exhibits an acid number of at least 5 (e.g., 5 to 50). Preferably, the acid number of the carboxylated cellulose ester is 10 to 35. In especially preferred embodiments, the acid number of the carboxylated cellulose ester product is 15 to 25.

The carboxylated cellulose ester product may be characterized further by determining the molecular weight of the product, e.g., by means of a suitable indirect method, such as inherent viscosity and/or concentrated solution viscosity. Preferably, the relative molecular weight of the product is determined by dissolving at 120°C 0.5 g of the product in 100 ml of a mixture of phenol and tetrachloroethane haing a phenol:tetrachloroethane weight ratio of 60:40 and then measuring the inherent viscosity of the solution at 25°C. The carboxylated cellulose ester product has an inherent viscosity when measured in this manner of 0.01 to 1.00. Preferably, the inherent viscosity is 0.05 to 0.5.

The carboxylated cellulose ester product is compatible with a number of solvents. These solvents include methanol; methylene chloride; diacetone alcohol; lower alkanoic acids, such as formic acid, acetic acid, propionic acid, etc.; lower alkyl ketones, such as acetone, methyl ethyl ketone, methyl propyl ketone, methyl isobutyl ketone, methyl amyl ketone, etc.; esters, such as ethyl acetate, isopropyl acetate, n-butyl acetate, isobutyl acetate, 2-butoxyethyl acetate, 1-methoxy-2-propyl acetate, 2-ethoxyethyl acetate, etc.; ethers such as 2-ethoxyethanol, 2-propoxyethanol, 2-butoxyethanol, etc.; and mixtures, such as mixtures of toluene and/or xylene with ethanol, mixtures of ethanol with esters (e.g., ethyl acetate, 1-methoxy-2-propyl acetate, etc.), or the like. Of course, the above listing is not intended to be exhaustive, but is indicative of the variety of solvents which may be employed in conjunction with the products of the present invention.

The carboxylated cellulose esters of this invention are compatible with a wide range of resinous materials. Classes of resins with which the carboxylated cellulose esters are compatible include, but are not limited to, thermoplastic acrylics, thermoset acrylics, silicone resins, alkyd resins, ordinary cellulose esters, urea formaldehyde resins, melamine resins, urethanes, nitrocellulose, unsaturated and other thermosetting polyester resins, etc.

Process for Preparing Carboxylated Cellulose Esters

In accordance with the process of the present invention, cellulose esters are reacted with ozone to yield a carboxylated cellulose ester product. The cellulose esters which are useful as starting materials in the present invention are well known, as also are methods for their production. See, for example, *Kirk-Othmer Encyclopedia of Chemical Technology,* 3rd Ed., Vol. 5, pages 118—129. Specific cellulose esters which are useful in the process of the present invention include cellulose propionate, cellulose butyrate, cellulose acetate butyrate, cellulose acetate propionate, mixtures thereof, etc. Especially preferred as a starting material in the process of the present invention is cellulose acetate butyrate.

The cellulose ester starting material is provided to a reaction zone in a form which is suitable for reaction with ozone. For instance, is is possible to provide the cellulose ester in the form of a solution in an appropriate solvent. The solvent for such a solution should be one in which both the cellulose ester starting material and the carboxylated cellulose ester product are soluble. The solvent also should be substantially unreactive with ozone. A wide variety of materials meets these criteria. Among the most inexpensive and readily available of the suitable solvents are the lower alkanoic acids and the lower alkyl ketones. A non-exclusive list of suitable solvents includes formic acid, acetic acid, acetone, methyl ethyl ketone, methyl propyl ketone, methyl isobutyl ketone, methyl amyl ketone, etc. Higher acids, such as propionic and butyric acids, are reactive with ozone, yielding lower acids. Because the ultimate lower acids are suitable solvents, these higher acids may also be employed as solvents in the present process, but are less preferred than the lower acids.

It is also contemplated that the cellulose ester starting material may be provided in the form of an aqueous slurry. However, reaction between ozone and cellulose ester may be somewhat more difficult to accomplish in such a system due to the low solubility of ozone in water.

The solvent and slurry systems described above offer the advantage of obviating the necessity of drying the cellulose ester starting material prior to reaction with ozone. However, following the reaction, the carboxylated product commonly is separated from the solvent or slurry system by evaporation, drying, etc. Therefore, the solution or slurry prior to reaction is preferably relatively concentrated in order to facilitate recovery of the product. However, the concentration of the slurry or solution is not critical and may be varied within wide limits, from very dilute to very concentrated, depending upon such factors as the nature of the solvent, the rate of agitation during the reaction, the degree of contact between the cellulose ester and the ozone, and other considerations which will be apparent to the person of ordinary skill in the art. Typically, however, a solids content of about 20 to 30% by weight is desirable, with a solids content of 20 to 25% by weight being preferred.

Preferably, however, the cellulose ester starting material is provided in a solid particulate form. For example, the cellulose ester can be provided as pellets, granules, powders, or any other convenient particulate form. In preferred embodiments, the cellulose ester is provided in the form of a powder.

In those embodiments wherein a solid cellulose ester is employed, the cellulose ester starting materials preferably have a moisture content no greater than about 50% by weight. At relatively high

moisture levels (e.g., greater than 25% by weight), the cellulose ester particles tend to clump together and longer reaction times are necessary in order to obtain a desirable product. It is not necessary to expend effort or resources in order to achieve a moisture content less than 15 weight percent, the efficiency of the oxidation reaction not being measurably affected thereby. However, fluidization of a cellulose ester powder (as discussed below) is most facile at moisture levels less than 5% by weight (e.g., 2% or less).

In the reaction zone, the cellulose ester is intimately contacted with a gaseous stream comprising ozone. The ozone can be generated from a source of molecular oxygen or from air by the use of any commercial ozone generator. The intimate contacting can be accomplished by any means which provides relatively rapid, complete, and uniform reaction between the cellulose ester and the ozone. For example, it is contemplated that the cellulose ester be agitated in the reactor while a gaseous stream containing ozone is passed through the reactor. Alternatively, in those especially preferred embodiments wherein the cellulose ester is present in the form of a powder, it is desirable to pass the gaseous stream containing ozone through a distributor plate and through the cellulose ester powder so as to create a fluidized solid.

The gaseous stream which is passed through the cellulose ester preferably comprises at least 0.25 weight percent ozone, based upon the total weight of gas present in the reaction system. Preferably, the ozone is present in a concentration of 0.5 to 4 percent by weight (e.g., 1 to 3%). Higher ozone concentrations (e.g., as high as 7% or higher) are of course, effective, but are increasingly uneconomical. The gaseous stream in addition to ozone further comprises air, oxygen, and/or inert diluent gas, such as nitrogen. In preferred embodiments, the gaseous stream comprises at least 90% nitrogen (about 50% $N_2$ and about 40% from air) and 1.5 to 2% ozone, the remainder comprising $O_2$, $CO_2$, and other components of air.

It will be apparent that there is an inverse relationship between ozone concentration and time of reaction, all other factors being constant. That is, as the concentration of ozone in the gas stream decreases, the time of reaction increases (ultimately, to uneconomically long periods of time).

It is believed that ozone partial pressure has an advantageous effect on rate of reaction. That is, as the partial pressure of ozone increases, the rate of reaction is believed to also increase. While the use of atmospheric pressure is preferred, it is conceivable that superatmospheric total pressures can also be employed. For a given ozone concentration, the partial pressure of ozone (and, therefore, the rate of reaction) is higher at superatmospheric pressures than at atmospheric pressure. Therefore, it may be possible to employ superatmospheric pressures and lower ozone concentrations to achieve a desired rate of reaction.

The cellulose ester is reacted with the ozone which is present in the gaseous stream. The reaction is conducted at a temperature of 25 to 80°C (preferably, 50 to 75°C). At reaction temperatures much above 75°C, the polymer particles may begin to stick together, thereby forming clumps, and the oxidation reaction is no longer homogeneous. Furthermore, the acids (such as acetic, propionic, and/or butyric) which are liberated during the ozone oxidation function as plasticizers for the cellulose ester starting material. The glass transition temperature of the reacting cellulosic material is thereby reduced, giving rise to additional polymer clumping problems at higher reaction temperatures.

The cellulose ester is reacted with the ozone for a period of time sufficient to yield a carboxylated cellulose ester product. Typically, desirable carboxylated cellulose ester products will have an acid number of at least 5. Of course, the time of reaction required to obtain desirable products depends upon such factors as temperature, the concentration of ozone in the gas stream, etc. Commonly, desirable products are obtained by reacting the cellulose ester starting material with ozone for a period of time of at least 0.5 hour. In preferred embodiments, the reaction is conducted for a period of time of 0.5 to 24 hours (e.g., 1 to 12 hours).

After the specified reaction time, the carboxylated cellulose ester product is removed from the reactor, separated from solvent (if employed), and purged free of the liberated aliphatic carboxylic acids by any convenient method. Commonly employed means include stripping the product under reduced pressure, heating the product in a forced-air oven, washing the product with water or mixtures of water with lower alkanols (such as methanol, ethanol, or i-propanol), etc. Alternatively, especially in embodiments wherein the reaction is conducted using solid particulate cellulose ester, the product can be purged by residual acid by-products in the reaction apparatus by passing a hot, inert purge gas (e.g., nitrogen) through the carboxylated cellulose ester product until it is free of residual acids.

An especially preferred post-treatment procedure involves washing the product with hot water at a temperature of 40 to 70°C. This manner of removing the liberated aliphatic carboxylic acids gives rise to a number of advantages. For example, products which have been washed with hot water as described above demonstrate improved storage stability. The hot water wash treatment also appears to facilitate the chain cleavage reaction described below. Such products also demonstrate more facile dissolution in solvents such as those described above. Moreover, solutions of products treated in this manner exhibit a significantly lower initial solution viscosity than do products which have not been so treated. (Products which have not been subjected to a hot water wash exhibit a relatively higher initial solution viscosity which gradually decreases with time until a relatively lower, stable solution viscosity is attained.) The above-described hot water wash procedure is, of course, most applicable to embodiments wherein the reaction is conducted using solid particulate cellulose ester. Similar results are also inherently obtained when the reaction system employs an aqueous slurry.

While not wishing to be bound by theoretical considerations, it appears that the process of the present invention involves a chemical modification of a cellulose ester starting material which has not been hitherto described in the literature. This chemical modification gives rise to a product having unique properties, the product also not having been recognized heretofore in the art. While the reaction mechanism is as yet not completely understood, it appears that the reaction of a cellulose ester with ozone involves oxidation of a primary hydroxyl group (or, possibly, an ester group) at the $C_6$ position of the anhydroglucose ring. When cellulose acetate butyrate is employed as the starting material, a segment of the carboxylated product might appear as follows:

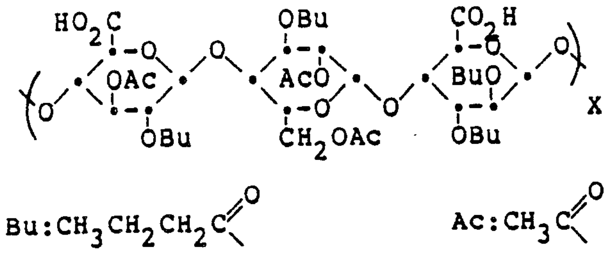

Oxidation

As the oxidation reaction proceeds, ester groups attached to the cellulose chain are cleaved, thereby yielding free acids as by-products. In addition, there is a chain cleavage reaction leading to the formation of a lactone, as illustrated below:

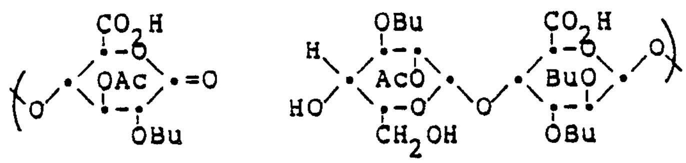

Cleavage

As illustrated by the above structural formulas, the carboxylate group of the product of the present invention is attached directly to the polymer backbone. In this manner, an acid group which is stable to hydrolysis is incorporated into the polymer.

The carboxylated cellulose esters provided by the present invention offer a number of advantages over existing cellulose ester products. The products of this invention are typically very low viscosity resins. These resins are compatible with a wide variety of solvents and other resins. Furthermore, the products contain free carboxyl groups which are stable to hydrolysis, yet are available for reaction.

These unique properties of the products of the present invention indicate their usefulness in a number of applications, most notably in coatings compositions. It is contemplated that the products of this invention will find utility in automotive finishes, wood coatings, inks, lacquers, pigment dispersions, etc.

Pigment Dispersions

Cellulose esters have found utility in pigment dispersions. In one type of conventional dispersion, a cellulose ester, such as cellulose acetate butyrate, is blended with an organic or inorganic pigment, and the mixture is then processed in suitable apparatus, such as a two-roll mill. During processing, frictional heat and/or heat provided from an external source causes the cellulose ester to soften and subsequently disperse the pigment. In this manner, expensive pigments can be easily dispersed in coating formulations, thereby providing high coloring power and good transparency while using a minimal amount of the pigment.

Such pigment dispersions can be improved by the use of the product of this invention in place of the ordinary cellulose esters previously employed. It is believed that the carboxyl groups present in the product of this invention provide improved wetting properties to the pigment dispersion. In this manner, pigment dispersions which are superior to those previously known can readily be formulated. In particular, mixtures of carboxylated cellulose esters (e.g., carboxylated cellulose acetate butyrate) and pigments at pigment:carboxylated cellulose ester weight ratios of about 20:80 to 50:50 can be prepared. For example, such mixtures can be processed on a heated two-roll mill for about 5 to 30 minutes. It was found that, after this type of processing, pigments were more finely dispersed in the carboxylated cellulose acetate butyrate, for example, than similar pigments dispersed in ordinary cellulose acetate butyrate under similar conditions. These pigment dispersions can be used to pigment formulations useful for aerosol finishes, printing inks, industrial lacquers, automotive coatings, wood stains, textile coatings, and coatings for films and foils. The dispersions can also be used as colorants for plastics and adhesives.

Other methods of dispersing pigments (solution methods) such as by ball mill, pebble mill, Kady mill, sand mill, etc., also incidate that carboxylated cellulose esters, such as the acetate butyrate and acetate propionate esters, are more efficient pigment dispersing agents than ordinary cellulose esters. In these methods, the carboxylated cellulose ester is dissolved in a suitable solvent, pigment is added, and the mixture is mixed in a mill for up to 48 hours. The resulting solution dispersion can be used to pigment lacquers, inks, automotive coatings, etc.

Pigments which have been evaluated and have been found to be suitably dispersed in carboxylated cellulose esters include perylenes, quinacridones, phthalocyanines, iron oxides, and carbon blacks. The wide compatibility of carboxylated cellulose esters allows the use of dispersions of pigments in the carboxylated cellulose esters to be used with a wide variety of polymers, thus making the dispersions useful in many paint and ink formulations.

Metal Coatings

Cellulose esters have been used in multilayer coating compositions, such as clear-on-base coatings (i.e., wet-on-wet coatings) and other such coating systems for metal substrates. Typically, the cellulose ester is employed in such systems as an additive to control solvent release and/or viscosity. However, the typical cellulose esters give rise to undesirably high viscosities at high solids contents. Therefore, this type of coating composition ordinarily is limited to solids contents in the range of 10 to 14% by weight. This type of coating composition is described, e.g., in U.S. Patent Nos. 3,639,147, 4,208,465, and 4,315,053.

These coating compositions can be improved by employing the product of the present invention in place of the previously employed ordinary cellulose esters. The use of the present product in such coating systems provides faster drying time (i.e., better solvent release) without a significant increase in the viscosity of the coating composition. Therefore, higher solids content on the order of 20 to 50% by weight (e.g., 25 to 40% by weight) can be obtained. This phenomenon is believed to be due to the reduced molecular weight of the carboxylated cellulose esters of the present invention and, perhaps, also to improved solvent compatibility due to the carboxyl groups positioned on the cellulose backbone of the present products.

In addition, the present products provide distinct advantages during curing of the coating composition over compositions which contain ordinary cellulose esters. For example, thermosetting automotive coatings for the original equipment market containing the carboxylated cellulose esters of the present invention can be cured (i.e., crosslinked) at temperatures as low as 120°C, or perhaps even lower. It is believed that these improvements are due to the presence of a greater number of active sites within the structure of the present product, the active sites being capable of crosslinking, thereby giving rise to harder coatings in polyester or acrylic coatings systems.

The novel clear-on-base metal coatings of the present invention comprise a non-aqueous base film and a transparent coating composition. The non-aqueous base film comprises a first film-forming material, uniformly dispersed pigments, and volatile organic solvents for the first film-forming material. The first film-forming material comprises about 20 to 50% by weight of a carboxylated cellulose ester and correspondingly about 50 to 80% by weight of a film-forming resin comprising an alkyd resin, a melamine resin, a polyester resin, an acrylic resin, a urethane resin, or a mixture thereof. In preferred embodiments, the carboxylated cellulose ester comprises carboxylated cellulose acetate butyrate. The film-forming resins mentioned above, suitable pigments, and suitable volatile organic solvents for the first film-forming material are all thoroughly described in the above-cited U.S. Patent No. 3,639,147. The non-aqueous base film may further comprise one or more additives for rheology control. A typical example of such a rheology control agent is aluminum stearate. Such an additive may be employed in an amount of about 1 to 5% by weight, based upon the total weight of nonvolatiles in the coating composition.

The transparent coating composition comprises a second film-forming material comprising an alkyd resin, a polyester resin, an acrylic resin, a urethane resin, or a mixture thereof, and volatile organic solvents for the second film-forming material. These components likewise are described in detail in the above-referenced U.S. patent. The second film-forming material of the transparent coating composition may further comprise the carboxylated cellulose ester product of the present invention. In those embodiments wherein the transparent coating comprises a carboxylated cellulose ester, the carboxylated cellulose ester is typically present in an amount of 10 to 30% by weight (e.g., 10 to 20% by weight), based upon the total weight of the second film-forming material. The inclusion of the carboxylated cellulose ester in the transparent top coat has been found to improve the rheology of the top coat, allowing the application of thicker coatings per pass.

The transparent coating composition is deposited on the base film so as to minimize intermixing or intersolution of the base film and the transparent coating composition. The propensity of the transparent coating composition and the base film of the coating system of the present invention to intermix during application of the transparent coating composition is much less than that of prior art clear-on-base metal coating compositions. In other words, the metal coating system of the present invention provides greatly improved resistance to redissolving of the base film upon application of the transparent coating composition. This feature, in conjunction with the lower viscosity of the composition at a higher solids content than prior art compositions, allows for more rapid application of the coating system of the present

invention. These advantages have great commercial appeal by providing for improvements in productivity and economy of operation.

In addition, the metal coating system of the present invention provides improvements in the aesthetics of the final coating. The coating system of the present invention provides better orientation of pigment flakes (e.g., aluminum flakes), thereby giving rise to improvements in clarity and depth in the appearance of the coating. These improvements are clearly demonstrated by Example 56 and Comparative Examples 10—15 which are provided below.

The carboxylated cellulose esters of the present invention are also useful in the formulation of urethane-type metal coatings. Such compositions are especially useful in the automotive refinish market. Such a coating is the reaction product of approximately stoichiometric quantities of a first component consisting essentially of a reactive polyfunctional isocyanate material and a second component. The second component comprises 20 to 100% by weight of a carboxylated cellulose ester and correspondingly 0 to 80% by weight of a thermosetting acrylic resin. In preferred embodiments, the second component of the urethane-type metal coating contains about 50% by weight of the carboxylated cellulose ester.

Suitable reactive polyfunctional isocyanate materials which can be employed as the first component are well-known in the art and are described, for example, in the *Kirk-Othmer Encyclopedia of Chemical Technology,* second edition, Vol. 12, pages 45—63. The thermosetting acrylic resins which can be employed in the second component of the novel urethane-type metal coating are well known in the art; selection of a suitable resin will be readily apparent to the person of ordinary skill in the art. The carboxylated cellulose ester which is employed in the second component of the novel urethane-type metal coating of the present invention in preferred embodiments comprises carboxylated cellulose acetate butyrate.

The novel urethane-type metal coating of the present invention may optionally include a minor amount of one or more additives as needed or desired. Such additives can include, for example, flow control agents (e.g., silicones or the like), surface active agents (for improved leveling properties), UV absorbents (e.g., hindered amines, such as Tinuvin® 900 or 292), etc.

The urethane-type metal coatings of the present invention provide distinct improvements over similar prior art compositions. In particular, the coating compositions of the present invention provide rapid drying properties which, as with the clear-on-base coatings described above, give rise to improvements in productivity and economy of operation.

Ink Compositions

Carboxylated cellulose esters are also useful in ink formulations. When a carboxylated cellulose ester is employed in an ink formulation, it can function as a medium to disperse the pigments for the ink, as discussed above, and it can also serve as a major film-forming resin. Ink formulations useful for printing by flexography, rotogravure, and screen processes can be based on carboxylated cellulose esters. Typical formulations can be prepared by employing carboxylated cellulose acetate butyrate, carboxylated cellulose acetate propionate, etc., rather than the ordinary cellulose acetate propionate or celluose acetate butyrate employed in various ink formulations. Typical prior art formulations employing conventional cellulose esters are described, for example, in the publication "Cellulose Acetate Propionate Inks for Flexible Substrates" (Formulator's Notes No. E—4.1C), which is available from Eastman Chemical Products, Inc., Kingsport, Tennessee, U.S.A.

Inks made from the carboxylated cellulose esters of the present invention have better gloss and color development due to the pigment dispersion ability of the carboxylated cellulose ester than similar inks based on ordinary cellulose esters. In addition, the carboxylated cellulose ester inks exhibit much better adhesion to foil and to corona-discharge treated polyolefin plastic film (e.g., polyethylene, polypropylene, etc.), vinylidene chloride, thermoplastic polyesters, etc., than do inks based upon ordinary cellulose esters.

The novel ink compositions of the present invention comprise 30 to 70% by weight of a carboxylated cellulose ester. In preferred embodiments, the carboxylated cellulose ester comprises carboxylated cellulose acetate propionate, carboxylated cellulose acetate butyrate, or a mixture thereof. Preferably, the ink composition comprises 45 to 70% by weight of the carboxylated cellulose ester.

The novel ink composition further comprises 30 to 70% by weight of an ink pigment. Of course, the concentration of the pigment will depend upon the particular pigment employed and the color and degree of hiding desired in the ink composition. For example, inorganic pigments, such as titanium dioxide, will typically be employed in greater concentrations than most organic pigments. Pigments which are useful in the ink compositions of the present invention are those which are well known in the art. Such pigments are described, for example, in the *Kirk-Othmer Encyclopedia of Chemical Technology,* second edition, Vol. 11, pages 613—615.

The ink composition of the present invention further comprises a solvent. The solvent is employed in a quantity which is sufficient to provide a viscosity which is suitable for applying the ink composition under the desired conditions. Again, the solvents for the ink compositions of the present invention are well known in the art and are described, for example, in the *Kirk-Othmer Encyclopedia of Chemical Technology,* second edition, Vol. 11, pages 621—623. Preferred solvents include ethanol, ethyl acetate isopropanol, diacetone alcohol, ethylene glycol monoethyl ether, ethylene glycol monobutyl ether, and mixtures thereof.

The ink compositions of the present invention may optionally contain one or more modifiers, such as

maleic resins, acrylic resins, sucrose ester resins (e.g., sucrose acetate isobutyrate), phthalate plasticizers (e.g., dioctyl phthalate, dioctyl terephthalate, dibutyl phthalate, mixtures thereof, etc.), polyester resins, urea formaldehyde resins, melamine resins, mixtures of the above, etc. Each of these modifiers typically is employed in an amount less than 15% by weight of the total ink composition. The total concentration of all of the above modifiers in the ink composition preferably is less than 60% by weight. When a reactive resin, such as a maleic resin, acrylic resin, urea-formaldehyde resin, melamine resin, etc., is employed in the ink composition, an acid catalyst commonly is employed. Examples of such a catalyst include, for example, para-toluenesulfonic acid, phenyl acid phosphate, methanesulfonic acid, hydrochloric acid, etc. The usual catalyst concentration typically is 1.5 to 3% by weight based upon the weight of the reactive resin solids.

The maleic resins which are employed in this and other aspects of the present invention are well known in the art. These resins typically are prepared by reacting rosin with maleic anhydride and/or a hydroxyl-containing compound, such as an alcohol, a glycol, glycerine, etc. The acrylic resins, polyester resins, urea-formaldehyde resins, etc., also are well known in the art, are available commercially, and need no further description here.

Wood Coatings

In wood coatings, carboxylated cellulose esters exhibit usefulness as major film-forming components in both curing and non-curing finishes. As an example of the curing type of wood finishes can be mentioned melamine/urea-formaldehyde/alkyd modified varnishes, which are well known in the art. In such a coating system, the carboxylated cellulose ester can be substituted for the ordinary cellulose ester commonly employed. For example, a typical formulation might comprise in the region of 10 weight percent of a carboxylated cellulose ester, such as carboxylated cellulose acetate butyrate, an alkyd resin (for example, in the range of about 20% by weight), a melamine resin, such as Cymel® 303 (typically about 2 to 5% by weight), a urea formaldehyde resin, such as Beetle® 80 (about 5 to 7.5% by weight), a relatively small amount of a silicone resin, such as SF 69, and a solvent system comprising suitable solvents such as xylene, toluene, ethanol, n-butyl alcohol, methyl ethyl ketone, etc. Flatting agents, such as Syloid® 83, Syloid® 378 and OK 412, are also commonly employed. Para-toluenesulfonic acid is also included in the coating composition as a catalyst.

Carboxylated cellulose esters can also be employed, rather than ordinarly cellulose esters, in urethane finishes for furniture. For example, carboxylated cellulose acetate butyrate could be employed in various formulations similar to those described in the publication "Formulating Cellulose Acetate Butyrate/Urethane-Finishes for Furniture" (Formulator's Notes No. E—3.6.1A), which is available from Eastman Chemical Products, Inc., Kingsport, Tennessee, U.S.A.

In particular, urethane wood finishes in accordance with the present invention comprise 1 to 60% by weight, based upon the total weight of film-forming components, of a carboxylated cellulose ester, 0 to 50% by weight (same basis) of a urethane-forming polyol, and 15 to 65% by weight (same basis) of a urethane-forming polyfunctional isocyanate. In preferred embodiments, the carboxylated cellulose ester comprises carboxylated cellulose acetate butyrate.

Typically, the theoretical NCO:OH ratio of the composition exceeds 1:1; that is, it is desirable to have an excess of isocyanate functionality (NCO) over hydroxyl functionality (OH). Optimum NCO:OH ratios may range as high as 3:1 or more. The person skilled in the art will be able readily to determine optimum NCO:OH ratios based upon properties of the final coating.

As mentioned above with regard to the discussion of the metal coatings provided by the present invention, urethane-forming polyfunctional isocyanates are well known in the art. Likewise, urethane-forming polyols are also well known in the art and are described, for example, in the *Kirk-Othmer Encyclopedia of Chemical Technology,* second edition, Vol. 21, pages 60—63. Urethane-forming polyols include polyether polyols, polyester polyols, polyhydroxy oils (e.g., castor oil), glycerides, etc.

In preferred embodiments of the urethane wood finishes of the present invention, the carboxylated cellulose ester is present in an amount of 40 to 55% by weight, the urethane-forming polyol is present in an amount of 2 to 10% by weight, and the urethane-forming polyfunctional isocyanate is present in an amount of 35 to 60% by weight.

The urethane wood finishes of the present invention preferably further comprise a solvent, or a mixture of solvents, which is substantially free of reactive hydroxyl groups. Such solvents typically will comprise ester and ketone solvents, which readily dissolve the carboxylated cellulose ester. Suitable solvents include methyl ethyl ketone, methyl n-amyl ketone, methyl butyl ketone, isobutyl acetate, aliphatic hydrocarbons, aromatic hydrocarbons (e.g., xylene, toluene, etc.), and other well known, suitable solvents.

The urethane wood finish of the present invention may further comprise a suitable catalyst. Typical catalysts include compounds of tin or zinc, such as dibutyl tin dilaurate. Such catalysts are employed in an amount which is sufficient to catalyze the rate of cure without unreasonably diminishing the sprayable pot life of the composition. Catalytic amounts of suitable catalysts which fulfill these conditions will be readily apparent to the person of ordinary skill in the art.

In each of the wood coating systems described above, the carboxylated cellulose ester allows the formulation of a coating composition which can be applied at higher solids content than a composition based upon the ordinary cellulose ester counterpart. Thus, there is produced a coating having more depth, higher gloss, and a smoother appearance. In addition, the finishes employing the carboxylated cellulose

ester are more resistant to attack by solvents, stains, and other chemicals and are tougher than finishes prepared from ordinary cellulose esters.

In non-curing finishes for wood (i.e., lacquers), the carboxylated cellulose esters can likewise be substituted for ordinary cellulose esters. Such a substitution can readily be made, for example, in the coating composition described in the publication "Light-Stable Cellulose Acetate Butyrate Wood Finishing Coating" (Publication No. E—240), which is available from Eastman Chemical Products, Inc., Kingsport, Tennessee, U.S.A. The coating composition described therein is a typical acrylic lacquer for furniture.

Furthermore, the carboxylated cellulose ester product of the present invention can be formulated into an alkyd modified lacquer. Such a system can ordinarily not be prepared from conventional organic esters of cellulose due to the incompatibility of these conventional organic cellulose esters with alkyds. The furniture lacquers based on carboxylated cellulose esters modified with an alkyd are fully compatible with most nitrocellulose-based furniture lacquers, a distinguishing feature not shared by lacquers based on conventional organic cellulose esters. The wood finishing modifying lacquer of the present invention comprises a carboxylated cellulose ester, an alkyd resin, a maleic resin, and/or a plasticizer, as well as a solvent for the film-forming components.

The carboxylated cellulose ester is employed in an amount of 20 to 80% by weight based upon the total weight of the film-forming components (i.e., the carboxylated cellulose ester, the alkyd resin, the maleic resin, and/or the plasticizer). The carboxylated cellulose ester preferably comprises carboxylated cellulose acetate butyrate.

The alkyd resin is employed in an amount of 0 to 50% by weight, based upon the total weight of the film-forming components. Any of the alkyd resins which are well known in the art and are available commercially can be employed herein.

The maleic resin, if employed, is employed in an amount up to 50% by weight, based upon the total weight of the film-forming components. Suitable maleic resins have been described generally above and are available commercially.

In the modifying lacquers of the present invention, the alkyd resin, if employed, provides flexibility and toughness to the final coating. The maleic resin, if employed, provides a harder, but more brittle, final coating. Therefore, at relatively high concentrations of the maleic resin in the modifying lacquer, it often is useful to incorporate a plasticizer, commonly in addition to an alkyd resin. Thus, for example, in a composition employing 50% by weight of a maleic resin, there would commonly be present 20% by weight of an alkyd resin and/or plasticizer and 30% by weight of the carboxylated cellulose ester.

Thus, as suggested above, the composition may further comprise up to 30% by weight, based upon the total weight of the film-forming components, of a plasticizer. Suitable plasticizers include phthalates, trimellitates, and other commonly employed plasticizers. Such plasticizers are well known in the art and include such compounds as dioctyl phthalate, dioctyl terephthalate, dibutyl phthalate, mixed trimellitate esters, etc. In preferred embodiments, the plasticizer comprises a phthalate ester, such as dioctyl phthalate.

In view of the distinct properties attributable to the inclusion of the various components in the modifying lacquer composition, it is necessary that one or both of the maleic resin and the alkyd resin be present in a total concentration of at least 10% by weight so as to provide a certain degree of sturdiness to the final coating. It is further necessary that the total concentration of the alkyd resin and/or the phthalate plasticizer be present in the composition in an amount of at least 20% by weight based upon the total weight of the film-forming components, so as to provide sufficient flexibility to the composition.

The modifying lacquer of the present invention further comprises a solvating quantity of a suitable solvent. Such solvents include lower alkyl esters of lower carboxylic acids, lower alkyl ketones, hydrocarbons having 5 to 12 carbon atoms, lower aliphatic alcohols, mixtures thereof, etc. The term "lower alkyl" as used herein denotes alkyl groups having up to about 8 carbon atoms. Suitable hydrocarbon solvents include aliphatic hydrocarbons, such as the alkanes, and aromatic hydrocarbons, such as toluene, xylene, etc. Thus, suitable solvents include methyl acetate, ethyl acetate, isobutyl acetate, methyl propionate, ethyl propionate, methyl ethyl ketone, methyl n-butyl ketone, methyl isobutyl ketone, methyl n-amyl ketone, n-pentane, n-hexane, cyclohexane, the isomeric octanes, toluene, xylene, ethanol, isopropanol, isobutanol, n-butanol, etc.

A typical alkyd-modified carboxylated cellulose ester furniture finishing lacquer might comprise, for example, 20 weight percent of carboxylated cellulose acetate butyrate; 7.5 to 8% by weight of a coconut oil modified alkyd (60% in xylene); 1.5 to 2% by weight of a dioctyl phthalate plasticizer; 7 to 8% by weight of isopropyl alcohol; 3.5 to 4% by weight of isobutyl alcohol; 14 to 14.5% by weight of xylene; 40 to 45% by weight of methyl isobutyl ketone; and 3 to 3.5% by weight of methyl amyl ketone. Of course, the person of ordinary skill in the art will be able to formulate similar desirable coating compositions without undue experimentation.

This invention will be further illustrated by the following Examples although it will be understood that these Examples are included merely for purposes of illustration and are not intended to limit the scope of the invention.

Examples 1—6 and Comparative Examples 1 and 2

Cellulose acetate butyrate powder was placed in a glass vessel fitted at the bottom with a porous glass frit. The powder was then treated with oxygen which contained ozone. The gas stream was regulated so

that the amount of ozone contacting the cellulose ester was controlled at a concentration of $1.4 \times 10^{-3}$ mole per minute. The reaction temperature was maintained at 60 to 70°C. After the respective specified reaction times, the oxidized product was isolated and placed in a circulating air oven at 70°C for 24 hours in order to remove residual by-product acids. The products were characterized by determining the acid number and inherent viscosity by the procedures described above. The results are given below in Table I.

TABLE I

| Ex. No. | Reaction Time (Hrs.) | Acid No. | I.V. |
|---|---|---|---|
| 1 | 0.5 | 4.7 | 0.46 |
| 2 | 0.75 | 6.6 | 0.37 |
| 3 | 1.0 | 8.9 | 0.27 |
| 4 | 2.67 | 19.0 | 0.15 |
| 5 | 3.0 | 24.9 | 0.12 |
| 6 | 5.0 | 45.8 | 0.08 |
| Comp. Ex. 1 | 0 | 0.8 | 1.45 |
| Comp. Ex. 2 | 5.0 | ~0 | 1.43 |

The data of Table I demonstrate that reaction times as short as 0.5 hour may be effective in the production of carboxylated cellulose esters, but that reaction times of 1 to 5 hours are preferred. The data further show that longer reaction times lead to increased acid number for the product. Also, the inherent viscosity of the product generally decreases with longer reaction times.

Each of these Examples demonstrates a marked increase in acid number and decrease in inherent viscosity as compared to the results of Comparative Examples 1 and 2. Comparative Example 1 gives data for a control sample of cellulose acetate butyrate, while Comparative Example 2 shows the results of contacting the starting material with $O_2$ rather than ozone. It is readily apparent that there was virtually no change in the material.

Examples 7—18

Examples 7—18 were conducted in the manner described above except that the moisture content of the cellulose acetate butyrate powder was varied between 1 and 50%. The results are given below in Table II.

TABLE II

| Ex. No. | Moisture Content of Ester (Wt. %) | Reaction Time (Hrs.) | Acid No. | I.V. | Ozone Conc. (moles/min.) |
|---|---|---|---|---|---|
| 7 | 50 | 2.0 | 17.5 | 0.34 | $2.2 \times 10^{-3}$ |
| 8 | 50 | 4.5 | 39.6 | 0.23 | $2.2 \times 10^{-3}$ |
| 9 | 50 | 7.0 | 42.2 | 0.16 | $2.2 \times 10^{-3}$ |
| 10 | 25 | 1.0 | 7.7 | 0.51 | $2.2 \times 10^{-3}$ |
| 11 | 25 | 3.0 | 19.6 | 0.24 | $1.4 \times 10^{-3}$ |
| 12 | 25 | 3.0 | 21.1 | 0.21 | $1.4 \times 10^{-3}$ |
| 13 | 15 | 3.0 | 23.3 | 0.16 | $1.4 \times 10^{-3}$ |
| 14 | 15 | 5.0 | 40.6 | 0.13 | $1.4 \times 10^{-3}$ |
| 15 | 12 | 5.0 | 42.0 | 0.12 | $1.4 \times 10^{-3}$ |
| 16 | 1 | 0.9 | 9.3 | 0.28 | $1.4 \times 10^{-3}$ |
| 17 | 1 | 3.0 | 24.3 | 0.16 | $1.4 \times 10^{-3}$ |
| 18 | 1 | 5.0 | 42.5 | 0.11 | $1.4 \times 10^{-3}$ |

The data in Table II indicate that moisture content of the ester, if 15 weight percent or less, does not significantly affect the ozone oxidation reaction. However, if the moisture content is greater than about 15 weight percent, then higher ozone concentrations and/or longer reaction times are normally required to achieve a desired level of oxidation. The data of Table II also again demonstrate that acid number increases with increasing reaction time and I.V. decreases with increasing reaction time, all other variables being constant.

Examples 19—27 and Comparative Example 3

Cellulose acetate propionate powder was subjected to oxidation with ozone as described above. The results are given below in Table III.

TABLE III

| | Ex. No. | Reaction Time (Hrs.) | Acid No. | I.V. | Ozone Conc. (moles/min.) |
|---|---|---|---|---|---|
| Comp. Ex. | 3 | 0 | 0.6 | 1.42 | 0 |
| | 19 | 0.5 | 5.9 | 0.40 | $1.4 \times 10^{-3}$ |
| | 20 | 0.5 | 10.1 | 0.43 | $1.4 \times 10^{-3}$ |
| | 21 | 1.0 | 14.6 | 0.34 | $5.6 \times 10^{-4}$ |
| | 22 | 1.0 | 14.0 | 0.25 | $1.4 \times 10^{-3}$ |
| | 23 | 1.0 | 19.9 | 0.25 | $1.1 \times 10^{-3}$ |
| | 24 | 1.0 | 13.9 | 0.23 | $2.2 \times 10^{-3}$ |
| | 25 | 3.0 | 35.1 | 0.11 | $2.2 \times 10^{-3}$ |
| | 26 | 5.0 | 41.1 | 0.08 | $2.2 \times 10^{-3}$ |
| | 27 | 6.0 | 48.1 | 0.07 | $1.4 \times 10^{-3}$ |

The data of Table III demonstrate that cellulose acetate propionate undergoes the desired oxidation reaction when treated with ozone, giving the desired carboxylated cellulose acetate propionate. The data also show that the progress of the reaction is affected by variations in reaction time and/or ozone concentration.

Examples 28—31 and Comparative Example 4

Cellulose acetate was oxidized with ozone according to the procedure described above. In each case, the ozone concentration was $1.4 \times 10^{-3}$ moles per minute. The results are given in Table IV below.

TABLE IV

| | Ex. No. | Reaction Time (Hrs.) | Acid No. | I.V. |
|---|---|---|---|---|
| Comp. Ex. | 4 | 0 | 0.2 | 1.28 |
| | 28 | 1.0 | 15.6 | 0.21 |
| | 29 | 3.0 | 37.4 | 0.09 |
| | 30 | 5.0 | 50.9 | 0:09 |
| | 31 | 6.0 | 68.2 | 0.07 |

The data of Table IV demonstrate that cellulose acetate undergoes oxidation by ozone to yield the desired carboxylated cellulose acetate product.

Example 32—34 and Comparative Examples 5-7

In Comparative Examples 5 and 6 and Examples 32 and 33, the starting material was cellulose acetate butyrate. In Example 32, the starting material was oxidized with ozone at a concentration of $1.4 \times 10^{-3}$ moles per minute for a reaction time of 2 hours as described above. In Example 33, the starting material was oxidized with ozone at $1.4 \times 10^{-3}$ moles per minute for a reaction time of 5 hours, as described above. In Comparative Example 5, the starting material was subjected to a stream of oxygen under the conditions described above for a period of time of 5 hours. In Comparative Example 6, the starting material was subjected under the conditions described above to oxygen gas which had been treated with UV irriadiation at 2537Å through a quartz window.

In Comparative Example 7 and Example 34, the starting material was cellulose acetate propionate. In Comparative Example 7, the starting material was subjected to an oxygen gas stream which had been treated with UV irradiation through a quartz window, while in Example 34, the starting material was subjected to a gas stream containing $1.4 \times 10^{-3}$ moles of ozone per minute. The results are given in Table V below.

TABLE V

| Ex. No. | Reaction Time (Hrs.) | Acid No. | I.V. |
|---|---|---|---|
| Comp. Ex. 5 | 5.0 | <1 | 1.43 |
| Comp. Ex. 6 | 5.0 | <1 | 1.43 |
| 32 | 2.0 | 15.0 | 0.19 |
| 33 | 5.0 | 43.3 | 0.08 |
| Comp. Ex. 7 | 5.0 | <1 | 1.34 |
| 34 | 5.0 | 40.0 | 0.08 |

The results of Table V indicate that neither molecular oxygen nor UV-activated oxygen is a satisfactory substitute for ozone in the process of the present invention. Only the use of ozone provides the desired carboxylated cellulose ester having an increased acid number and a reduced inherent viscosity.

Examples 35—49

Cellulose acetate butyrate powder was placed in a stainless steel reactor 76.2 cm (30 inches) high and 15.2 cm (6 inches) in diameter. The vessel was jacketed to maintain the reaction temperature at 65°C. The reactor was charged with 1800 grams (2250 grams in Example 41) of the cellulose acetate butyrate starting material. A source of dry air was used to generate ozone under an electrical current of 3.5 amps. The ozone/air stream was further diluted with dry nitrogen just before it entered the reaction vessel. The gas stream comprised 23.83 grams per hour of ozone, 570 liters (20 SCF) per hour of air (855 liters [30 SCF] per hour in Example 41), and 570 liters (20 SCF) per hour of nitrogen (855 liters [30 SCF] per hour in Example 41). The cellulose ester starting material was fluidized by the gaseous stream and subjected to reaction conditions for the time indicated. The results are given in Table VI.

TABLE VI

| Ex. No. | Yield (grams) | Acid No. | I.V. | Reaction Time (Hrs.) |
|---|---|---|---|---|
| 35 | 1736 | 5.02 | .665 | 0.67 |
| 36 | 1721 | 5.67 | .540 | 1 |
| 37 | 1719 | 8.83 | .319 | 2 |
| 38 | 1725 | 9.57 | .298 | 2.5 |
| 39 | 1741 | 11.48 | .277 | 3 |
| 40 | 1751 | 14.38 | .223 | 3.5 |
| 41 | 2184 | 14.25 | .202 | 4 |
| 42 | 1749 | 15.20 | .222 | 4 |
| 43 | 1704 | 19.56 | .182 | 5 |
| 44 | 1737 | 19.17 | .165 | 6 |
| 45 | 1710 | 27.05 | .127 | 7.75 |
| 46 | 1736 | 26.78 | .132 | 8 |
| 47 | 1749 | 27.60 | .124 | 8.5 |
| 48 | 1757 | 38.75 | .099 | 10 |
| 49 | 1692 | 35.6 | .125 | 10.25 |

The data of Table VI show that air is an acceptable low cost raw material for producing carboxylated cellulose esters in large quantities.

Examples 50—55

The procedure described above for Examples 35—49 was repeated except that cellulose acetate propionate was employed as the starting material. The results are given below in Table VII.

TABLE VII

| Ex. No. | Yield (grams) | Acid No. | I.V. | Reaction Time (Hrs.) |
|---|---|---|---|---|
| 50 | 1718 | 4.99 | .669 | 0.5 |
| 51 | 1725 | 5.61 | .598 | 0.75 |
| 52 | 1735 | 12.84 | .213 | 3 |
| 53 | 1783 | 15.61 | .185 | 3.5 |
| 54 | 1799 | 40.18 | .090 | 10 |
| 55 | 1815 | 43.72 | .073 | 12 |

Again, the data demonstrate that carboxylated cellulose esters can be produced in large quantities using air as the source of ozone.

Comparative Example 8

The apparatus described in Example 1 was charged with microcrystalline cellulose (Avicel PH 101) and was treated with ozone for 5 hours at 60 to 70°C. The microcrystalline cellulose was recovered unchanged.

Comparative Example 9

The apparatus described in Example 1 was charged with cellulose wood pulp which had been ground so that the resulting particles had a particle size of about 0.25 mm or less. The charge was treated with ozone for 5 hours at 60 to 70°C. Again, the cellulose was recovered unchanged. These Comparative Examples demonstrate that cellulose (as opposed to a cellulose ester) is not suitable as a starting material in the process of the present invention.

Example 56

This Example illustrates the use of a carboxylated cellulose acetate butyrate in a clear-on-base metal coating composition. The carboxylated cellulose acetate butyrate was produced by the process of the present invention from an ordinary cellulose acetate butyrate. The coating composition comprised the following components:

| Component | Wt.% |
|---|---|
| Alftalat™ Polyester (70%) in xylene) | 18.38 |
| Resimene® Melamine | 8.58 |
| Carboxylated Cellulose Acetate Butyrate (30% in 85:15 n-butyl acetate:n-butanol) | 23.84 |
| Aluminum Stearate (7% in 90:10 xylene: isopropanol) | 12.40 |
| p-Toluenesulfonic Acid (40% in isopropanol) | 0.70 |
| Solvent (60:20:20 n-butyl acetate:xylene:isopropanol) | 28.02 |
| Aluminum Flake Pigment (65% in mineral spirits) | 8.08 |
| | 100.00 |

The carboxylated cellulose acetate butyrate employed in the composition exhibited an acid number of 20 and represented about 25% of the resin solids in the composition. The polyester resin remployed is a commercial product of Hoechst, and the malamine resin is a commercial product of Monsanto. The aluminum pigment was obtained commercially from the Silberline Corporation.

The composition of the present example exhibited a No. 4 Ford Cup viscosity of 15.5 sec. at a nonvolatiles content of 35%. The composition exhibited a No. 4 Ford Cup viscosity of 14 sec. (i.e., typical spray viscosity) at a nonvolatiles content of 32.7%. The composition exhibited excellent resistance to redissolving upon application of a transparent top coat.

Comparative Example 10

The coating composition of Example 56 was prepared as described therein, except that in place of the carboxylated cellulose acetate butyrate described in Example 56 there was employed the ordinary cellulose acetate butyrate from which the carboxylated cellulose acetate butyrate of Example 56 was produced. The resulting composition exhibited a viscosity which was too high for the composition to be employed in coatings applications.

The results of Example 56 and Comparative Example 10 demonstrate the remarkably unexpected nature of coating compositions containing the carboxylated cellulose esters of the present invention. In contrast to prior art formulations employing ordinary cellulose esters, the carboxylated cellulose ester products of the present invention provide coating compositions having relatively high solids content and, at the same time, sufficiently low viscosities to render them useful for coatings applications. In addition, the coating compositions employing the carboxylated cellulose ester products provide improved resistance to redissolving upon application of a transparent topcoat. The coating compositions of the present invention further provide aesthetically pleasingly finished coatings.

Comparative Examples 11—15

Comparative Example 10 was repeated except that the ordinary cellulose ester employed in Comparative Example 10 was replaced with cellulose acetate butyrate resins having lower molecular weights. The lower molecular weight resins were employed so that compositions having suitable viscosities for coating applications could be prepared.

The No. 4 Ford Cup viscosities of the coating compositions of Comparative Examples 11—15 were determined and are set forth in Table VIII below.

TABLE VIII

| Comp. Ex. No. | Viscosity at 35% NV | % NV at 14 Sec. |
|---|---|---|
| 11 | 85 | 19.8 |
| 12 | 60 | 20.8 |
| 13 | 33 | 24.6 |
| 14 | 17.5 | 31.0 |
| 15 | 13 | 35+ |

The results of Comparative Examples 11—13 clearly demonstrate that ordinary cellulose esters are incapable of providing the desirable combination of high solids content and low viscosity for clear-on-base coating applications. While Comparative Examples 14 and 15 have viscosities and percent nonvolatiles values comparable to those reported in Example 56 for the carboxylated cellulose ester product of the present invention, the resins employed in Comparative Examples 14 and 15 had extremely low molecular weights. Furthermore, the compositions represented by Comparative Examples 14 and 15 offered very poor resistance to redissolving upon application of a transparent topcoat. Therefore, these coating compositions based upon low molecular weight ordinary cellulose esters are undesirable for use in coatings applications.

**Claims**

1. A carboxylated cellulose ester having an acid number of at least 5 and an inherent viscosity of 0.01 to 1.00, said carboxylated cellulose ester being selected from the group consisting of carboxylated cellulose propionate, cellulose butyrate, cellulose acetate butyrate, cellulose acetate propionate, or a mixture thereof.

2. The carboxylated cellulose ester of claim 1 wherein the acid number thereof is 5 to 50.

3. The carboxylated cellulose ester of claim 1 wherein the acid number thereof is 10 to 35.

4. The carboxylated cellulose ester of claim 1 wherein the inherent viscosity thereof is 0.05 to 0.5.

5. The carboxylated cellulose ester of claim 1 wherein said cellulose ester comprises cellulose acetate butyrate.

6. Process for the preparation of a carboxylated cellulose ester according to claim 1, said process comprising the steps of

(a) providing a cellulose ester to a reaction zone;

(b) intimately contacting said cellulose ester in said reaction zone with a gaseous stream comprising ozone; and

(c) reacting said cellulose ester with said ozone at a temperature of 25 to 80°C for a period of time of at least 0.5 hour, the ozone concentration in the gaseous stream being of at least 0.25 percent by weight.

7. The process of claim 6 wherein said cellulose ester is provided to said reaction zone in solid particulate form.

8. The process of claim 7 which further comprises washing the product with hot water at a temperature of 40 to 70°C.

9. The process of claim 6 wherein said cellulose ester is provided to said reaction zone in the form of an aqueous slurry.

10. The process of claim 6 wherein said cellulose ester is provided to said reaction zone in the form of a solution in a solvent in which both said cellulose ester and said carboxylated cellulose ester are soluble and which is substantially unreactive with ozone.

11. A composition for pigment dispersions, metal coating systems, ink compositions, wood finishes, characterized in that said composition contains a carboxylated cellulose ester according to any of claims 1 to 5.

**Patentansprüche**

1. Carboxylierter Celluloseester mit einer Säurezahl von mindestens 5 und einer Inherent-Viskosität von 0,01 bis 1,00, ausgewählt aus der Gruppe bestehend aus carboxyliertem Cellulosepropionat, Cellulosebutyrat, Celluloseacetatbutyrat und Celluloseacetatpropionat oder einer Mischung hiervon.

2. Carboxylierter Celluloseester nach Anspruch 1, in dem die Säurezahl 5 bis 50 beträgt.

3. Carboxylierter Celluloseester nach Anspruch 1, in dem die Säurezahl 10 bis 35 beträgt.

4. Carboxylierter Celluloseester nach Anspruch 1, in dem die Inherent-Viskosität bei 0,05 bis 0,5 liegt.

5. Carboxylierter Celluloseester nach Anspruch 1, in dem der Celluloseester Celluloseacetatbutyrat enthält oder daraus besteht.

6. Verfahren zur Herstellung eines carboxylierten Cellulosesters nach Anspruch 1 mit den folgenden Stufen:

(a) Einführen eines Celluloseesters in eine Reaktionszone;

(b) inniges Inkontaktbringen des Celluloseesters in der Reaktionszone mit einem Gasstrom mit Ozon und

(c) Umsetzen des Cellulosesters mit dem Ozon bei einer Temperatur von 25 bis 80°C mindestens 0,5 Stunden lang, bei einer Ozonkonzentration in dem Gasstrom von mindestens, 0,25 Gew.-%.

7. Verfahren nach Anspruch 6, in dem der Cellulosester der Reaktionszone in fester teilchenförmiger Form zugeführt wird.

8. Verfahren nach Anspruch 7, bei dem ferner das Produkt mit heißem Wasser bei einer Temperatur von 40 bis 70°C gewaschen wird.

9. Verfahren nach Anspruch 6, in dem der Celluloseester der Reaktionszone in Form einer wäßrigen Aufschlämmung zugeführt wird.

10. Verfahren nach Anspruch 6, in dem der Cellulosester der Reaktionszone in Form einer Lösung in einem Lösungsmittel, in dem der Celluloseester und der carboxylierte Celluloseester löslich sind und das mit Ozon praktisch nicht reaktionsfähig ist, zugeführt wird.

11. Zusammensetzung für Pigment-Dispersionen, Metallbeschichtungsysteme, Farbzusammensetzungen und Holzausrüstungen, dadurch gekennzeichnet, daß die Zusammensetzung einen carboxylierten Celluloseester nach einem der Ansprüche 1 bis 5 enthält.

**Revendications**

1. Ester de cellulose carboxylé ayant un indice d'acide d'au moins 5 et une viscosité inhérente de 0,01 à 1,00, ledit ester de cellulose carboxylé étant choisi dans le groupe constitué par le propionate de cellulose carboxylé, le butyrate de cellulose, l'acétobutyrate de cellulose, l'acétopropionate de cellulose ou un mélange de ces esters.

2. Ester de cellulose carboxylé de la revendication 1, dont l'indice d'acide est compris entre 5 et 50.

3. Ester de cellulose carboxylé de la revendication 1, dont l'indice d'acide est compris entre 10 et 35.

4. Ester de cellulose carboxylé de la revendication 1, dont la viscosité inhérente est comprise entre 0,05 et 0,5.

5. Ester de cellulose carboxylé de la revendication 1, qui est l'acétobutyrate de cellulose.

6. Procédé de preparation de l'ester de cellulose carboxylé selon la revendication 1, comprenant les étapes suivantes:

a) introduire un ester de cellulose dans une zone de réaction;

b) mettre en contact intime l'ester de cellulose dans la zone de réaction avec un courant gazeux contenant de l'ozone;

c) faire réagir l'ester de cellulose avec l'ozone à une température de 25 à 80°C pendant au moins 0,5 heure, la concentration en ozone dans le courant gazeux étant d'au moins 0,25% en masse.

7. Procédé de la revendication 6 dans lequel l'ester de cellulose est introduit dans la zone de réaction sous forme de particules solides.

8. Procédé de la revendication 7 comprenant en outre le lavage du produit avec de l'eau chaude à une température de 40°C à 70°C.

9. Procédé de la revendication 6 dans lequel l'ester de cellulose est introduit dans la zone de réaction sous forme de bouillie aqueuse.

10. Procédé de la revendication 6 dans lequel l'ester de cellulose est introduit dans la zone de réaction sous forme de solution dans un solvant dans lequel l'ester de cellulose et l'ester de cellulose carboxylé sont tous deux solubles et qui ne réagit pratiquement avec l'ozone.

11. Composition pour des dispersions de pigments, des systèmes d'enduit métallique, des encres, des vernis pour bois, caractérisée en ce qu'elle contient un ester de cellulose carboxylé selon l'une quelconque des revendications 1 à 5.